# EUROPÄISCHE PATENTANMELDUNG

(11) **EP 1 180 843 A1**
(43) Veröffentlichungstag der Anmeldung: **20.02.2002**
(21) Anmeldenummer: 01112189.4
(22) Anmeldetag: 18.05.2001
(51) Int. Cl.: H02K 7/06, F16H 25/20

(54) **Linearstellglied**

(30) Priorität: 09.08.2000 DE 10039618
(71) Anmelder: Eduard Bautz GmbH + Co. KG, 64331 Weiterstadt (DE)
(72) Erfinder: Hass, Timo, Dipl.-Ing., 64331 Schneppenhausen (DE); Gutmann, Michael, Dipl.-Ing., 65796 Dittelsheim-Hessloch (DE)
(74) Vertreter: KEIL & SCHAAFHAUSEN

(57) **Zusammenfassung**

Es wird ein Linearstellglied für die Umsetzung einer rotatorischen Antriebskraft in einer translatorischen Stellbewegung beschrieben, das ein Gehäuse (2), einen in dem Gehäuse (2) drehbar gelagerten Hohlwellenrotor (4), der bspw. über einen mehrphasigen Stator (8) oder dgl. drehangetrieben wird, und eine in dem Hohlwellenrotor (4) längsverschieblich angeordnete Spindel (12) aufweist, die mit einer mit dem Hohlwellenrotor (4) verbundenen Spindelmutter (10) in Gewindeingriff steht und gegen eine Drehung abgestützt ist. Eine Entlastung der Spindelmutter (10) von Querkräften wird dadurch erreicht, dass das Gehäuse (2) auf einer ersten Seite eine Öffnung (14) aufweist, durch die ein Kolbenabschnitt (13) der Spindel (12) wenigstens teilweise aus dem Gehäuse (2) heraus verschiebbar ist, und dass zwischen der Öffnung (14) und der Spindelmutter (10) ein Lagerelement (15) angeordnet ist, über das der Kolbenabschnitt (13) der Spindel (12) axial gleitend geführt wird.

## Beschreibung

Die Erfindung betrifft ein Linearstellglied für die Umsetzung eines rotatorischen Antriebsmoments in eine translatorische Stellbewegung mit einem Gehäuse, mit einem in dem Gehäuse drehbar gelagerten, bspw. permanenterregten Hohlwellenrotor, der bspw. über einen mehrphasigen Stator oder dgl. drehangetrieben wird, und mit einer in dem Hohlwellenrotor längsverschieblich angeordneten Spindel, die mit einer mit dem Hohlwellenrotor verbundenen Spindelmutter im Gewindeeingriff steht und die gegen eine Eigendrehung abgestützt ist.

Derartige Linearstellglieder werden in vielfältiger Weise eingesetzt, um kurzhübige hin- und hergehende Bewegungen auszuführen. Hierzu wird mit einem entsprechenden Stator ein Drehfeld erzeugt, das einen in dem Motorgehäuse angeordneten Hohlwellenrotor antreibt. In dem Hohlwellenrotor ist eine Spindelmutter vorgesehen, die über einen Momentenschluss, wie z.B. eine Passfeder oder dgl., mit dem Hohlwellenrotor verbunden ist, so dass sie sich gemeinsam mit diesem dreht. Durch die Spindelmutter ist eine Gewinde- oder Kugelrollspindel hindurchgeführt, die über eine Drehmomentenstütze an einer Drehung gehindert wird. Bei einer über die Spindelmutter übertragenen Drehung des Hohlwellenrotors vollzieht die Spindel somit eine translatorische Bewegung relativ zu dem Hohlwellenrotor. Der Hohlwellenrotor bildet ein nach beiden Seiten offenes Rohr, so dass die Spindel je nach Drehrichtung des Motors links oder rechts aus dem Hohlwellenrotor ausfährt. Problematisch ist hierbei die Genauigkeit der linearen Lagerung der Spindel, da eine Verkantung durch oft in solchen Anwendungen auftretende Radial- oder Querkräfte in der Spindelmutter verhindert werden soll. Hierzu kann die Lagerung der Spindel bspw. durch eine zweite Spindelmutter unterstützt werden, durch die die Spindel hindurchfährt. Die auf die Spindel und die Spindelmutter wirkenden Querkräfte sind jedoch relativ hoch, so dass derartige Kugelgewindetriebe oft eine nicht zufriedenstellende Lebensdauer haben und regelmäßig ausgetauscht werden müssen. Es wurde bereits versucht, die Lebensdauer durch Verwendung sogenannter Planetenrollspindeln oder Gewinderollentriebe, die Radialkräfte besser aufnehmen können, zu erhöhen, doch bewirkt dies gleichzeitig eine erhebliche Kostensteigerung.

Aufgabe der Erfindung ist es daher, die über die Spindel auf die Spindelmutter wirkenden Querkräfte zu reduzieren und eine Verlängerung der Einsatzzeit zu erreichen.

Diese Aufgabe wird bei einem gattungsgemäßen Linearstellglied im wesentlichen dadurch gelöst, dass das Gehäuse auf einer ersten Seite eine Öffnung aufweist, durch die ein Kolbenabschnitt der Spindel wenigstens teilweise aus dem Gehäuse heraus verschiebbar ist, wobei zwischen der Öffnung und der Spindelmutter ein Lagerelement angeordnet ist, über das der Kolbenabschnitt der Spindel axial gleitend geführt wird.

Das Lagerelement übernimmt die Hauptlagerlast der auf die Spindel wirkenden Querkräfte. Die Spindelmutter dient nahezu ausschließlich zur Umwandlung der Rotationsbewegung in die translatorische Stellbewegung. Dadurch können die auf die Spindel übertragenen Querkräfte reduziert und die Lebensdauer des Gewindetriebes wesentlich erhöht werden. Zudem ist bei diesem Aufbau des Linearstellglieds der Abstand zwischen dem Lager und der Spindelmutter unabhängig von dem Hub konstant. Daraus resultiert eine gleichmäßige Belastung des Lagers und der Spindelmutter, so dass die Einsatzzeit der Komponenten weiter verlängert wird.

Das Lagerelement ist erfindungsgemäß an der Stelle positioniert, an der die größten Radialkräfte auf die Spindel und das Kolbenteil wirken, so dass diese Kräfte von dem Lager aufgenommen werden können und die Belastung der Spindelmutter reduziert wird.

Bei einer bevorzugten Ausgestaltung der Erfindung ist der Kolbenabschnitt einstückig mit einem mit der Spindelmutter in Eingriff stehenden Gewindeabschnitt der Spindel ausgebildet. Es ist jedoch auch möglich, die Abschnitte separat herzustellen und anschließend fest miteinander zu verbinden. Am Übergang von Kolbenabschnitt zu Gewindeabschnitt kann ein Absatz vorgesehen sein, der auch als Anschlag zur Verschiebungswegbegrenzung verwendet werden kann.

Vorzugsweise ist die Spindelmutter in einem Bereich zwischen der Mitte des Gehäuses und der der Öffnung gegenüberliegenden zweiten Seite des Gehäuses angeordnet. In Abhängigkeit des eingesetzten Motortyps kann bei dieser Anordnung der Spindelmutter eine optimale Raumausnutzung in dem Gehäuse und somit eine kleinere Baugröße des Linearstellgliedes realisiert werden. Da die Hauptlagerkräfte nicht durch die Spindelmutter, sondern durch das Lager des Kolbenabschnitts aufgenommen werden, kann die Spindelmutter an einer beliebigen Stelle innerhalb des Gehäuses unabhängig von auf die Spindel oder dem damit verbundenen Kolbenabschnitt wirkenden Kräften variabel angeordnet werden.

Gemäß einer bevorzugten Ausgestaltung der Erfindung ist das Lager ein vorzugsweise mit Graphit oder dgl. versetztes Gleitlager. Bei einer anderen Ausführungsform ist das Lager als eine Kugelbüchse mit oder ohne Drehmomentstüze ausge-bildet. Auch Gleitlager aus Kunststoff oder anderen geeigneten Materialien sind einsetzbar.

Vorzugsweise weist der Kolbenabschnitt eine Drehmomentstütze auf, die sowohl den Kolbenabschnitt als auch den damit drehfest verbundenen Gewindeabschnitt der Spindel gegen ein Verdrehen innerhalb des Gehäuses sichert. Die Drehmomentstütze kann extern oder intern vorgesehen sein.

Es wird in bestimmten Einsatzfällen auch ermöglicht, die Drehmomentstütze des Kolbenabschnitts dadurch vorzusehen, dass das Kolbenteil selbst als eine Vielkeilwelle ausgebildet ist und das Lager eine entsprechende Linearführung ist. Der Kolbenabschnitt kann dabei mit einem beliebigen Querschnitt so ausgebildet werden, dass es zur Aufnahme eines Werkzeugs geeignet ist.

Weiterhin wird es bevorzugt, dass der Hohlwellenrotor an seinem dem Kolbenteil abgewandten Ende über einen Wellendichtring oder dgl. gegen das Gehäuse abgedichtet und über eine Kappe verschlossen ist. Das gesamte Spindelsystem ist damit gegen äußere Einflüsse, wie Verschmutzung, abgedichtet. Entsprechend kann auch im Bereich der Öffnung des Gehäuses eine Dichtung vorgesehen sein, die den Kolbenabschnitt gegen das Gehäuse abdichtet, so dass das gesamte Linearstellglied vor Verschmutzung und Beschädigung geschützt wird.

Erfindungsgemäß ist dem Hohlwellenrotor ein Gebersystem, z.B. ein sog. Resolver, zur Erfassung der Geschwindigkeit und Lage des Hohlwellenrotors zur Ansteuerung des Motors bspw. über eine programmierbare Steuereinheit zugeordnet. Hierfür kann dem Hohlwellenrotor auch ein externes oder internes Lagemesssystem zugeordnet sein.

Nach einer weiteren Ausführungsform der Erfindung wird der die Spindel und den Kolbenabschnitt aufnehmende Innenraum des Hohlwellenrotors durch die Spindelmutter in zwei Kammern unterteilt, wobei die dem Kolbenabschnitt abgewandte Kammer über einen Entlüfungskanal mit der Umgebung in Verbindung steht. Hierdurch wird ein Druckausgleich geschaffen, so dass eine Beeinträchtigung der Motorleistung und der Dichtigkeit durch eine Pumpenfunktion des Gewindeabschnitts der Spindel verringert wird. Entsprechend kann auch in dem den Kolbenabschnitt der Spindel aufnehmenden Teil des Gehäuses eine Entlüfung vorgesehen sein.

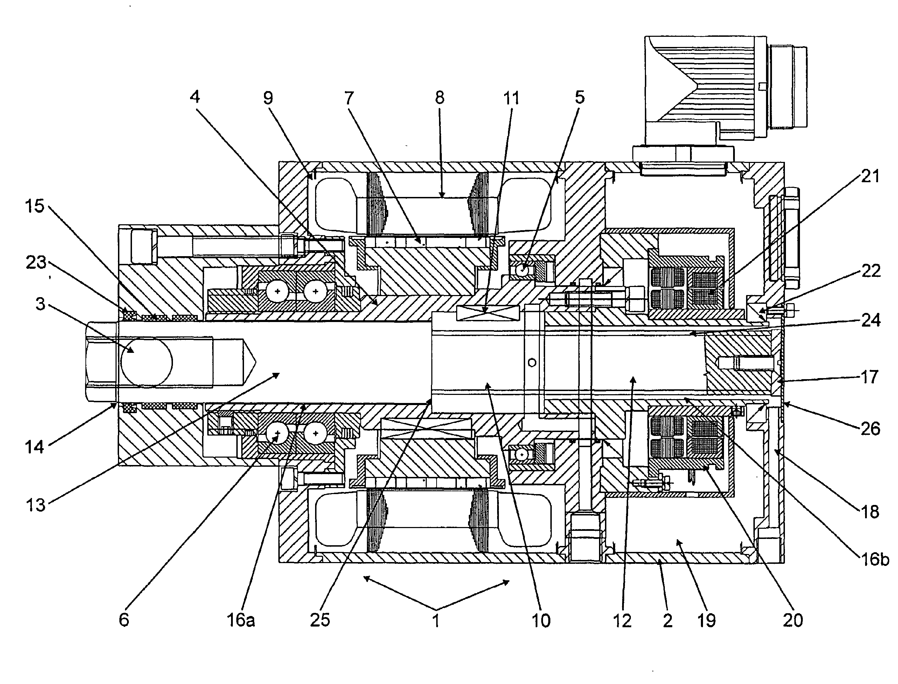

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung oder deren Rückbeziehung.

Die einzige Figur zeigt einen schematischen Schnitt durch ein erfindungsgemäßes Linearstellglied 1, bei dem es sich um einen permanenterregten, mehrphasigen und mehrpoligen Servomotor handelt. Ein Motorgehäuse 2 des Stellgliedes 1 ist über eine Motoraufhängung 3 an einer nicht näher dargestellten Vorrichtung angebracht und nimmt einen drehbar gelagerten Hohlwellenrotor 4 auf. Zur Lagerung des Hohlwellenrotors 4 ist ein schwimmendes Radiallager 5 und eine Lagerkombination 6 zur Aufnahme von Axial- und Radialkräften vorgesehen. Auf der Außenseite des Hohlwellenrotors 4 ist eine Vielzahl von über dem Umfang des Hohlwellenrotors 4 verteilten Magneten 7 angeordnet, die mit einem Magnetfeld in Wechselwirkung treten, das durch einen Stator 8 erzeugt wird, der in einem um den Hohlwellenrotor 4 vorgesehenen Statorraum 9 angebracht ist. Grundsätzlich ist es aber auch möglich, den Hohlwellenrotor über ein Getriebe oder eine andere Motorausführung, wie bspw. Asynchron- oder Reluktanzmotoren etc., anzutreiben.

Mit dem Hohlwellenrotor 4 ist eine Spindelmutter 10 über eine momentenschlüssige Verbindung, wie eine Passfeder 11 oder dgl., drehfest verbunden. Durch die Spindelmutter 10 ist ein als Kugelrollspindel ausgebildeter Gewindeabschnitt 24 einer Spindel 12 durchgeführt, der fest mit einem Kolbenabschnitt 13 verbunden ist. Die Spindel 12 ist über eine nicht näher dargestellte Drehmomentenstütze intern oder extern gegen Verdrehen gesichert. Der Gewindeabschnitt 24 der Spindel 12 kann dabei einstückig mit dem Kolbenabschnitt 13 ausgebildet oder lösbar mit diesem verbunden sein. Der Kolbenabschnitt 13 ist nicht mit einem Gewinde versehen und weist gegenüber dem Gewindeabschnitt 24 eine wenigstens in Axialrichtung glatte Oberfläche auf. In der dargestellten Ausführungsform ist der Kolbenabschnitt 13 als ein Wellenzapfen ausgebildet, der koaxial zu der Spindel 12 ist. Durch die Gestaltung des Kolbenabschnitts 13 bspw. als Vielkeilwelle kann der Kolbenabschnitt 13 selbst und damit die ganze Spindel 12 gegen Verdrehen gesichert werden. Am Übergang des Kolbenabschnitts 13 zu dem Gewindeabschnitt 24 ist ein Absatz 25 vorgesehen, über den der Kolbenabschnitt 13 in eingefahrenem Zustand an der Spindelmutter 10 anliegt. Der Absatz 25 kann damit zur Begrenzung des Verschiebungsweges dienen. Die Begrenzung des Verschiebungsweges in Ausfahrrichtung erfolgt bspw. über eine Anschlagscheibe 17 in Verbindung mit der Spindelmutter 10.

Auf der in der Figur linken Seite des Gehäuses 2 ist eine im Wesentlichen der Kontur des Kolbenabschnitts 13 entsprechende Öffnung 14 ausgebildet, durch die der Kolbenabschnitt 13 bereichsweise aus dem Gehäuse 2 herausragt. Im Bereich der Öffnung 14 ist ein Lager 15 vorgesehen, in dem der Kolbenabschnitt 13 axial verschiebbar gleitend gelagert ist. Das Lager 15 kann der Querschnittsgestaltung des Kolbenabschnitts 13 entsprechend ein Gleitlager, eine Kugelbüchse oder eine Linearführung ggf. mit Drehmomentenstütze sein.

Der die Spindel 12 aufnehmende Innenraum 16 des Hohlwellenrotors 4 wird durch die Spindelmutter 10 in eine erste Kammer 16a und in eine zweite Kammer 16b unterteilt und an dem der Spindelmutter 10 abgewandten Ende der zweiten Kammer 16b durch eine Kappe 26 verschlossen. Über einen Entlüftungskanal 18 steht die zweite Kammer 16b mit der Umgebung des Gehäuses 2 in Verbindung. Die erste Kammer 16a kann über einen ähnlichen Entlüftungskanal in entsprechender Weise mit der Umgebung verbunden sein.

In dem Motorgehäuse 2 ist ein den Hohlwellenrotor 4 umgreifender Resolveraum 19 ausgebildet, in dem ein Gebersystem (Resolver) 20 zur Erfassung der Geschwindigkeit und Lage des Hohlwellenrotors 4 angeordnet ist. Der Resolver 20 erfasst über sein an dem Hohlwellenrotor 4 angebrachtes Rotorteil 21 die Rotationsgeschwindigkeit des Hohlwellenrotors 4 und kann dadurch die Geschwindgkeit und Lage der Spindel 12 bzw. eines an dem vorderen Ende des Kolbenabschnitts 13 angebrachten Werkzeugs bestimmen und an eine programmierbare Steuerung weiterleiten, die hiervon ausgehend die von dem Linearstellglied 1 angetriebene Vorrichtung ansteuert.

Der Hohlwellenrotor 4 ist gegenüber dem Gehäuse 2 auf der in der Figur rechten Seite über einen Wellendichtring 22 abgedichtet. Auf der gegenüberliegenden Seite des Linearstellgliedes 1 ist der Kolbenabschnitt 13 zum Schutz gegen eintretenden Schmutz über eine entsprechende Dichtung 23 gegen das Gehäuse 2 abgedichtet.

Nachfolgend wird eine Beschreibung der Funktionsweise des Linearstellgliedes 1 gegeben.

Der permanenterregte, insbesondere dreiphasige und sechspolige Servomotor treibt den Hohlwellenrotor 4 mit Hilfe des durch den Stator 8 erzeugten Magnetfeldes an, so dass sich der Rotor 4 dreht. Dadurch dreht sich auch die mit dem Rotor 4 drehfest verbundene Spindelmutter 10 und fährt die Spindel 12 je nach Drehrichtung des Motors aus dem Hohlwellenrotor 4 aus oder in diesen hinein. Hierbei werden die Querkräfte durch das Lager 15 aufgenommen. Dadurch wird das Gewinde der Spindel 12 im Wesentlichen nicht belastet, so dass seine Lebensdauer wesentlich erhöht wird.

Bei einer Hin- und Herbewegung der Spindel 12 in dem Hohlwellenrotor 4 stehen die erste Kammer 16a und/oder die zweite Kammer 16b des Hohlwellenrotors 4 über den Entlüftungskanal 18 mit der Umgebung des Gehäuses in Verbindung, so dass ein Druckausgleich erfolgt und sich kein die Abdichtung der Hohlwelle beeinträchtigender erhöhter Druck aufbauen kann.

Die Drehbewegung des Hohlwellenrotors 4 wird über das Gebersystem 20 erfasst und darüber die Geschwindigkeit und Lage der Spindel 12 bestimmt.

Nachdem die auf die Spindel 12 wirkenden Radialkräfte im Wesentlichen durch das Lager 15 aufgenommen werden, wird die Spindelmutter 10 von den auftretenden Querkräften entlastet, so dass sich die Lebensdauer der Spindeleinheit wesentlich verlängern lässt. Die Spindelmutter dient im Wesentlichen nur noch als Gegenlager. Gleichzeitig wird auch die Erwärmung der Spindeleinheit und die Belastung der Wälzelemente stark verringert. Durch den fest vorgegebenen Abstand zwischen dem Lager 15 und der Spindelmutter 10 sind die auf die Spindelmutter 10 wirkenden Kräfte unabhängig von der Position der Spindel 12 und des Kolbenabschnitts 13 im Wesentlichen konstant und daher im Voraus berechenbar. Hierdurch ist es möglich, als Gewindeabschnitt 24 der Spindel 12 eine Kugelrollspindel zu verwenden, die kostengünstig hergestellt werden kann.

### Bezugszeichenliste:

- 1: Linearstellglied
- 2: Motorgehäuse
- 3: Motoraufhängung
- 4: Hohlwellenrotor
- 5: Radiallager
- 6: Lagerkombination
- 7: Magnet
- 8: Stator
- 9: Statorraum
- 10: Spindelmutter
- 11: Passfeder
- 12: Spindel
- 13: Kolbenteil
- 14: Öffnung
- 15: Lager
- 16: Innenraum
- 16a: erste Kammer
- 16b: zweite Kammer
- 17: Anschlagscheibe
- 18: Entlüftungskanal
- 19: Resolverraum
- 20: Gebersystem, Resolver
- 21: Rotorteil
- 22: Wellendichtring
- 23: Dichtung
- 24: Gewindeabschnitt
- 25: Absatz
- 26: Kappe

## Patentansprüche

1. Linearstellglied für die Umsetzung einer rotatorischen Antriebskraft in eine translatorische Stellbewegung mit:
einem Gehäuse (2),
einem in dem Gehäuse (2) drehbar gelagerten, bspw. perma-nenterregten Hohlwellenrotor (4), der über einen mehrphasigen Stator (8) oder dgl. drehangetrieben wird, und
einer in dem Hohlwellenrotor (4) längsverschieblich angeordneten Spindel (12), die mit einer mit dem Hohlwellenrotor (4) verbundenen Spindelmutter (10) in Gewindeeingriff steht und gegen eine Drehung abgestützt ist,
**dadurch gekennzeichnet, dass** das Gehäuse (2) auf einer ersten Seite eine Öffnung (14) aufweist, durch die ein Kolbenabschnitt (13) der Spindel (12) wenigstens teilweise aus dem Gehäuse (2) heraus verschiebbar ist, und dass zwischen der Öffnung (14) und der Spindelmutter (10) ein Lagerelement (15) angeordnet ist, über das der Kolbenabschnitt (13) der Spindel (12) axial gleitend geführt wird.

2. Linearstellglied nach Anspruch 1, **dadurch gekennzeichnet, dass** der Kolbenabschnitt (13) einstückig mit einem mit der Spindelmutter (11) im Eingriff stehenden Gewindeabschnitt (24) der Spindel (12) ausgebildet ist.

3. Linearstellglied nach Anspruch 1 oder 2, **dadurch gekennzeichnet, dass** die Spindelmutter (10) in einem Bereich zwischen der Mitte des Gehäuses (2) und der der Öffnung (14) gegenüberliegenden, zweiten Seite des Gehäuses (2) angeordnet ist.

4. Linearstellglied nach einem der Ansprüche 1 bis 3, **dadurch gekennzeichnet, dass** das Lagerelement (15) ein vorzugsweise mit Graphit oder dgl. versetztes Gleitlager ist.

5. Linearstellglied nach einem der Ansprüche 1 bis 3, **dadurch gekennzeichnet, dass** das Lagerelemente (15) eine Kugelbüchse ist.

6. Linearstellglied nach einem der vorhergehenden Ansprüche 1 bis 3, **dadurch gekennzeichnet, dass** der Kolbenabschnitt (13) der Spindel (12) eine Drehmomentstütze aufweist.

7. Linearstellglied nach Anspruch 5, **dadurch gekennzeichnet, dass** der Kolbenabschnitt (13) eine Vielkeilwelle und das Lagerelement (15) eine entsprechende Linearführung ist.

8. Linearstellglied nach einem der vorhergehenden Ansprüche, **dadurch gekennzeichnet, dass** der Hohlwellenrotor (4) an seinem dem Kolbenabschnitt (13) der Spindel (12) abgewandten Ende über einen Wellendichtring (22) oder dgl. gegen das Gehäuse (2) abgedichtet und über eine Kappe (26) verschlossen ist.

9. Linearstellglied nach einem der vorhergehenden Ansprüche, **dadurch gekennzeichnet, dass** dem Hohlwellenrotor (4) ein Gebersystem (20) zur Erfassung seiner Geschwindigkeit und Lage zugeordnet ist.

10. Linearstellglied nach einem der vorhergehenden Ansprüche, **dadurch gekennzeichnet, dass** der die Spindel (12) aufnehmende Innenraum (16) des Hohlwellenrotors (4) durch die Spindelmutter (10) in zwei Kammern (16a, 16b) unterteilt wird, wobei die dem Kolbenabschnitt (13) der Spindel (12) abgewandte Kammer (16b) über einen Entlüftungskanal (18) mit der Umgebung in Verbindung steht.
